# FASCICULE DE BREVET EUROPEEN

(11) **EP 2 475 032 B1**
(45) Date de publication et mention de la délivrance du brevet: **01.08.2018**
(21) Numéro de dépôt: 12157204.4
(22) Date de dépôt: 25.06.2004
(51) Int. Cl.: H01M 4/04, H01M 4/62, H01M 4/134, H01M 4/1395, H01M 4/38, H01M 4/36, C01B 33/02, H01M 10/052, H01M 4/505, H01M 4/525

(54) **Procédé de préparation d'électrode à partir d'un matériau poreux, électrode ainsi obtenue et système électrochimique correspondant**
Herstellungsverfahren einer Elektrode aus einem porösen Material, so erhaltene Elektrode und entsprechendes elektrochemisches System
Method for preparing an electrode using a porous material, electrode thus obtained and corresponding electrochemical system

(30) Priorité: 25.06.2003 CA 2432397
(43) Date de publication de la demande: 11.07.2012
(62) Demande divisionnaire de: 04737895.5
(73) Titulaire: HYDRO-QUEBEC, Montréal, Québec H2Z 1A4 (CA)
(72) Inventeur: Zahhib, Karim, Longueuil, Québec J4M 2M7 (CA); Guerfi, Abdelbast, Brossard, Québec J4X 1W2 (CA); Charest, Patrick, Sainte-Julie, Québec J3E 1P2 (CA); Kostecki, Robert, Lafayette, CA 94549 (US); Kinoshita, Kimio, Cupertino, CA 95014 (US); Armand, Michel, 75014 Paris (FR)
(74) Mandataire: Goulard, Sophie

(56) Documents cités:
- EP-A1- 1 054 462
- JP-A- 2003 263 986
- DIMOV N ET AL: "Carbon-coated silicon as anode material for lithium ion batteries: advantages and limitations", ELECTROCHIMICA ACTA, ELSEVIER SCIENCE PUBLISHERS, BARKING, GB, vol. 48, no. 11, 15 mai 2003 (2003-05-15), pages 1579-1587, XP004417812, ISSN: 0013-4686, DOI: 10.1016/S0013-4686(03)00030-6
- SHIN, H. C. ; SHI, Z. ; LIU, M. ; SEALS, L. T. ; GOLE, J. L.: "Porous silicon-based electrodes for lithium batteries.", ELECTROCHEMICAL SOCIETY PROCEEDINGS, ELECTROCHEMICAL SOCIETY, PENNINGTON, NJ, US, vol. 2002-26, 2002, pages 518-525, XP008052988, ISSN: 0161-6374

## Description

### Domaine technique de l'invention

La présente invention a pour objet, des procédés de préparation d'électrodes selon les revendications déposées, à partir d'un matériau poreux, en particulier les procédés de préparation d'électrodes impliquant la préparation d'un alliage et ceux au cours desquels les électrodes sont au moins partiellement recouvertes de carbone.

La présente invention a également pour objet les électrodes obtenues à partir d'un matériau poreux ou contenant un matériau poreux, en particulier des électrodes négatives pour les micro batteries au lithium qui contiennent un silicium poreux.

Un autre objet de la présente invention est constitué par tout système électrochimique contenant au moins une électrode obtenue à partir d'un matériaux poreux ou contenant un matériau poreux, et plus particulièrement les systèmes électrochimiques contenant des micro batteries constituées d'au moins une électrode selon l'invention.

### Description de l'état de la technique

Les générateurs à électrolytes polymères récemment développés utilisent le lithium métallique, parfois le sodium, ou d'autres métaux alcalins, comme feuillards d'anode. Les métaux alcalins sont malléables et peuvent être mis en oeuvre sous forme de films minces comme cela est mentionné dans les brevets CA-A-2.099.526 et CA-A-2.099.524.

Toutefois, l'usage du lithium métallique ou d'autres métaux alcalins présente, dans certains cas d'utilisation extrême, e.g. à des températures supérieures à 100° Celsius, des risques de fusion du lithium ou du métal alcalin et de destruction de la cellule électrochimique. De plus, dans des conditions forcées de cyclage électrochimique, la formation de dendrites, par exemple de dendrites de lithium peut se produire, notamment en présence de courants de recharge trop élevés. La formation de dendrites s'accompagne de nombreux désavantages. Alors que le même alliage, lorsqu'il fonctionne à un potentiel plus anodique, par exemple à un potentiel dont la valeur est comprise entre +300 à 450 mVolts pour le lithium aluminium vs le lithium, ne permet par le dépôt de lithium ni la croissance dendritique.

L'usage d'alliages de métaux alcalins, notamment le lithium, est ainsi décrit dans le brevet US-A-4.489.143, dans le cas de générateurs fonctionnant en milieux sels fondus.

En milieux organiques, et plus particulièrement en milieu polymère, où les épaisseurs des films d'électrodes sont inférieures à 100 micromètres, il devient très difficile de mettre en oeuvre des feuillards d'anode alliés (aussi appelés feuillards à base d'alliages). En effet, les composés intermétalliques du lithium utilisables comme anodes, tels que LiAl, Li₂₁Si₅, Li₂₁Sn₅, Li₂₂Pb₅ et autres, sont durs et cassants et ne peuvent être laminés comme le lithium ou comme le lithium faiblement allié. Il est par ailleurs mentionné dans le brevet CA-A-1.222.543, que ces anodes peuvent être élaborées en films minces en produisant des composites constituées de poudres du composé intermétallique liées par l'électrolyte polymère, ou encore, dans le brevet US-A-4.590.840, qu'il est possible dans certaines conditions de pré-lithié le feuillard du métal hôte de l'anode, en en traitant chimiquement la surface ou en chargeant électrochimiquement une partie du feuillard.

Toutefois, ces techniques quoique fonctionnelles dans certaines conditions, mettent en oeuvre des matériaux réactifs, et les alliages pré-insérés sont souvent pyrophoriques ou posent des difficultés de mise en oeuvre et d'optimisation des performances. Lorsque les anodes sont préparées à l'état déchargé, une des difficultés majeures à surmonter vient de l'importante variation volumique résultant de la formation de l'alliage qui entraîne des stress importants sur la structure.

Lorsque l'on cherche à former l'alliage à partir d'un feuillard du métal hôte non-lithié lors de l'assemblage ou après l'assemblage d'un générateur à électrolyte polymère, l'expansion volumique de la structure dans le sens de l'épaisseur des feuillards n'a pu être compensée que par une conception appropriée de la cellule, en accommodant par exemple l'augmentation d'épaisseur totale des feuillards superposés, d'autant plus que dans le sens de l'épaisseur, la variation est très courte et donc beaucoup plus négligeable.

Des technologies connues pour la réalisation de micro batteries dans un système électrochimique sont décrites dans la conférence, 1th ABA BRNO 2000, Advanced Batteries and Accumulators, June 28.8-1.9, 2000 Brno University of technology, Antoninska 1, Brmno, Czech Republic http://www.aba-brno.cz/aba2000/part_I/13-bludska.pdf, et dans la référence : Bull. Master. Science., Vol.26, No.7, December 2003, pp.673-681 http://www.ias.ac.in/matersci/bmsdec2003/673.pdf, et nécessitent l'importation de la micro batterie dans le système.

La demande de brevet EP-A1-1 054 462 décrit une batterie au lithium dans laquelle l'anode inclut in matériau fritté qui contient de 50 à 99 % en masse de silicium et de 1 à 50 % en masse d'un matériau carboné, et qui possède une conductivité électrique de 1 S/cm.

Dimov et al. (Electrochimica Acta, 2003, 48, 1579-1587) décrit la préparation d'une anode pour des batteries au lithium par enrobage d'une poudre de silicium non poreux avec un matériau carboné.

Shin H. C. et al. (Electrochemical Society "Proceedings, Electrochemical Society, Pennington, NJ, US, vol. 2002-26; 2002, pages 518-525) décrivent l'utilisation d'anodes constituée d'une couche mince à base de silicone poreaux comportant éventuellement un revêtement ultra fin de plomb dans des batteries au lithium.

Il existait donc un besoin pour de nouveaux matériaux susceptible d'être utilisés comme élément constitutif d'une électrode et dépourvues d'un ou de plusieurs des inconvénients des matériaux traditionnellement utilisés dans cette application.

Il existait plus particulièrement un besoin pour un nouveau matériau d'électrode présentant au moins une des propriétés suivantes :
- une grande capacité en mAh/gramme ;
- une grande capacité en mAh/litre ;
- une bonne cyclabilité ;
- un faible taux d'autodécharge ;
- une bonne tolérance environnementale.

Il existait également un grand besoin pour des nouveaux matériaux d'électrode adaptés pour la microtechnologie telle que les micro-batteries.

Il existait de plus un besoin pour des électrodes très peu fissurées à l'issue de leur fabrications et ce, dans un soucis de longévité.

### Brève description des dessins

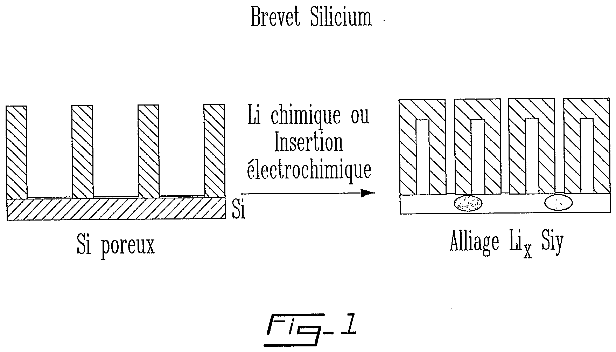

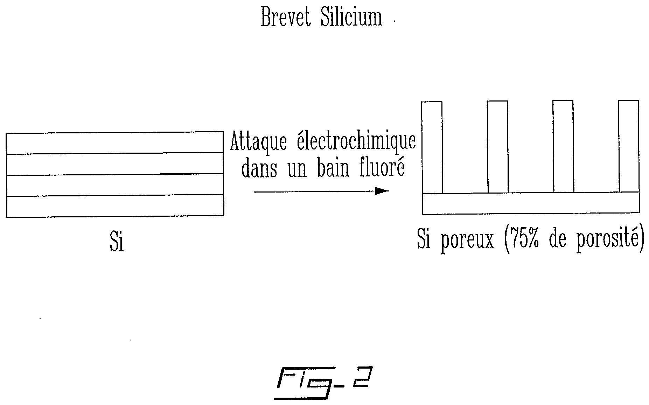

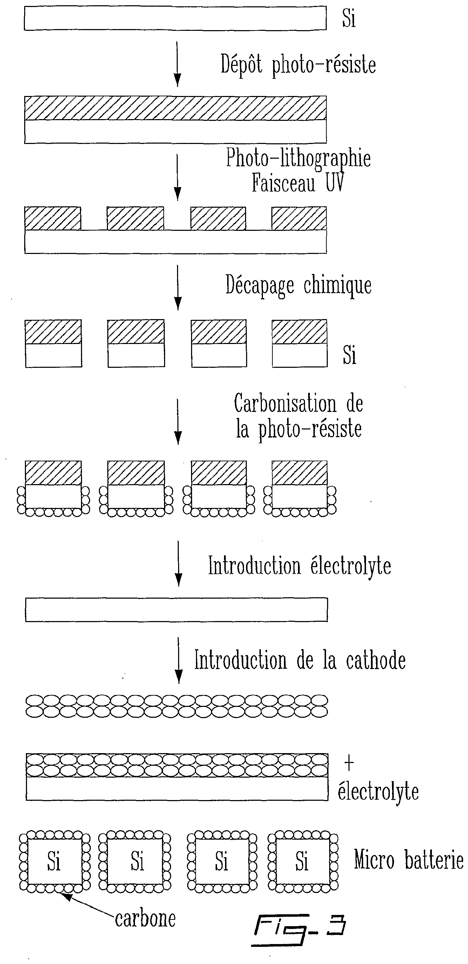

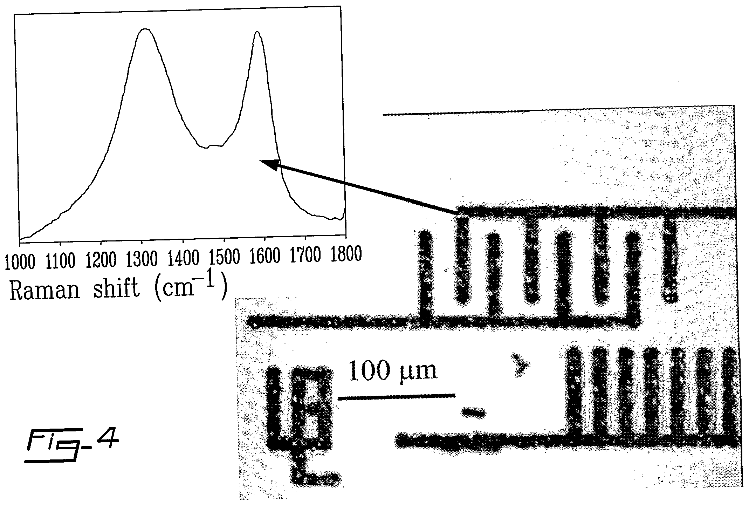

**La** **Figure 1-4** montre le mécanisme d'insertion du lithium dans le silicium par un procédé selon l'invention avec formation d'un alliage LiₓSi_{y}.
**La** **Figure 2-4** montre le mécanisme de formation électrochimique, selon un mode de réalisation de l'invention, d'un silicium poreux qui sert comme anode pour micro batteries.
**La** **Figure 3-4** est relative à la fabrication d'une micro batterie selon l'invention à partir d'une électrode à base de silicium poreux enrobé de carbone. Le rôle de ce carbone est d'établir un pont électrochimique entre le silicium et le lithium. De plus, le carbone assure la conductivité électronique de l'électrode négative à base de silicium poreux. Il sert également à l'adhésion des particules de silicium lors de l'extension volumique.
   Les différentes étapes de cette fabrication sont les suivantes :
   1- déposition des couches minces de la photo-résiste;
   2- placement d'un masque, puis passage d'un faisceau UV pour réticuler les zones désirées;
   3- Dissolution des zones non réticulées par un décapage chimique;
   4- Carbonisation de la photo-résiste non décapée (qui formera l'anode dans la micro batterie);
   5- Introduction de l'électrolyte, suivie de la cathode;
   6- Découpage dans les zones décapées pour avoir des micro batteries.
**La** **Figure 4-4** est relative à une image optique d'une structure de carbone obtenue par pyrolyse laser d'une couche de photo-résiste. Le graphe en haut représente le spectre Raman du carbone obtenu.

### Résumé de l'invention

Procédés de préparation d'électrode pour système électrochimique à partir d'un matériau poreux permettent de préparer des électrodes pour systèmes électrochimiques présentant des propriétés très intéressantes en ce qui concerne leurs performances physico-chimiques mais aussi mécaniques. La technologie présentée permet de créer des micro batteries, directement dans les circuits électrochimiques.

### Description générale de l'invention

**Un premier objet** de la présente invention est constitué par un procédé de préparation d'une électrode pour système électrochimique à partir d'un matériau poreux. De préférence, le matériau poreux utilisé présente une porosité, mesurée selon la méthode au mercure ci-apres référée, qui varie de 1 à 99 %, bornes comprises. Plus avantageusement encore, la porosité du matériau varie de 20 à 80 %, bornes comprises.

Selon un mode avantageux de réalisation de l'invention, le matériau poreux utilisé est tel que la taille moyenne des pores qui s'y trouvent varie de 1 nanomètre à 1 micromètre, bornes comprises. Plus préférentiellement encore la taille des pores varie de 10 à 250 nanomètres, bornes comprises.

Selon un autre mode avantageux de réalisation, la dispersion des pores est sensiblement uniforme. De préférence, cette distribution est choisie de façon que sa d50 se situe entre 100 et 150 nanomètres.

Les pores sont avantageusement situés en surface du matériau poreux et s'étendent au travers dudit matériau poreux. De préférence, les pores présentent une profondeur comprise entre 1 micromètre et 3 millimètres et ledit matériaux poreux une épaisseur comprise entre 2 micromètres et 3,5 millimètres. Il est souhaitable que la majorité des pores présents dans le matériau poreux ne traversent pas tout le matériau poreux de part en part. Cela aurait pour conséquence de fragiliser le film d'électrode. Le matériau poreux est le silicium. La préparation de l'alliage est réalisée par voie chimique et/ou électrochimique.

Il a été constaté de façon surprenante que des résultats particulièrement intéressants sont obtenus lorsque le taux de porosité du matériau utilisé pour former l'électrode est tel que les cavités du matériau poreux peuvent absorber l'extension volumique générée lors de la formation de l'alliage avec le métal alcalin.

Selon l'invention, une anode est préparée à partir d'un silicium poreux.

Une anode conforme à l'invention peut ainsi être obtenue par formation d'un alliage à partir d'au moins une source de silicium poreux et d'au moins un métal alcalin choisi dans le groupe constitué par Li, Na, Ca et les mélanges d'au moins deux de ces derniers. Avantageusement, une anode est préparée à partir d'un silicium poreux, dont la porosité, mesurée selon la méthode du porosimètre à mercure, varie de 5 à 95 % en volume, bornes comprises. Plus avantageusement encore, la porosité du silicium utilisé est d'environ 75% en volume.

Le silicium poreux utilisé comme matériau poreux est obtenu à partir d'une source de silicium choisi dans le groupe constitué par : les gaufres de silicium, les pastilles de silicium, les films de silicium et les mélanges d'au moins 2 de ces derniers.

De préférence, le silicium poreux utilisé comme matériau poreux est obtenu à partir d'un silicium monocristal.

De préférence, l'alliage est à base de silicium poreux et il est sous la forme SiₓLi_{y}, avec x représentant un nombre compris entre 1 et 5, et y représentant un nombre compris entre 5 et 21. Plus préférentiellement encore, dans l'alliage, x représente environ 4 et y représente environ 21.

Selon un mode avantageux de réalisation de l'invention, l'alliage formé est de type SiₓLi_{y} et il est obtenu électrochimiquement en contactant une source de silicium avec du lithium et/ou du lithium métallique sous forme de feuillards ou de gaufres, à une température comprise entre 40 et 100° Celsius, de préférence à une température d'environ 80° Celsius. La durée de la mise en contact de la source de silicium, avec du lithium et/ou du lithium métallique sous forme de feuillards ou de gaufres, est comprise entre 1 et 12 heures, de préférence ladite durée est d'environ 3 heures.

**Un deuxième objet** de la présente invention est constitué par les électrodes obtenues par la mise en oeuvre d'un procédé selon l'une quelconque des procédés décrit dans le premier objet de l'invention.

Une sous famille avantageuse d'anodes selon l'invention est constituée par les anodes contenant au moins 60 % massique et de préférence au moins 40 % de silicium poreux recouvertes au moins partiellement de carbone. Les anodes selon l'invention présentent l'avantage d'être substantiellement dépourvues de fissures.

**Un troisième objet** de la présente invention est constitué par les systèmes électrochimiques tels que ceux qui comportent au moins une anode obtenue par l'un quelconque des procédés de préparation définis dans le premier objet de l'invention ou tel que défini dans le deuxième objet de l'invention.

À titre d'exemple préférentiel de systèmes électrochimiques particulièrement préférentiel, on peut citer les batteries dans lesquelles l'électrolyte est de type, liquide, gel, ou polymère.

De préférence, dans ces batterie, la cathode est de type LiCoO₂, LiFePO₄, LiNiO₂, LiNi_{0,5}Mn_{0,3}O₂, LiNi_{0,33}Co_{0,33}Mn_{0,33}O₂, et la cathode de préférence est de type 1 à 5 Volts.

Des batteries de type rechargeable offrant des performances particulièrement significative sont ainsi obtenues, de préférence elles sont de type lithium ion.

Une sous famille de batteries de l'invention d'intérêt est constituée par celles sous forme de micro batteries, ayant de préférence des dimensions comprises entre 1 mm2 et 10cm2, et qui présentent au moins une des propriétés électrochimique suivantes :
- une capacité électrochimique supérieure à 1 µWh
- une cyclabilité supérieure à 500, de préférence supérieure à 1000 cycles;
- un taux d'autodécharge inférieur à 5 %, de préférence inférieur à 4 %, plus préférentiellement encore inférieur à 3 %; et
- une durée de vie, mesurée selon le test de stockage réalisé dans les conditions ambiantes, qui est supérieure à 3 ans, de préférence supérieure à 5 ans.

**Un quatrième objet** de la présente invention est constitué par l'utilisation des anodes de l'invention, dans un système électrochimique. De préférence, l'anode est utilisée comme électrode négative pour micro batteries au lithium.

**Un cinquième objet** de la présente invention est constitué par les procédés de fabrication d'une anode, à base de silicium poreux et recouverte au moins partiellement de carbone, obtenue par pyrolyse thermique d'une couche de polymère, déposée de préférence en couche mince sur un support de préférence isolant en silicium poreux tel du Si3N4. La pyrolyse du polymère est conduite avantageusement à une température comprise entre 600 et 1.100°C et, de préférence, pour une durée comprise entre 30 minutes et 3 heures.

Selon une autre variante de l'invention, lors de la mise en oeuvre du procédé de fabrication d'une électrode à base de silicium poreux et recouvert au moins partiellement de carbone, on réalise la pyrolyse laser d'une couche de polymère déposée de préférence en couche mince sur un support (isolant) en silicium. Le faisceau utilisé fourni de préférence une intensité comprise entre 10 et 100 milliwatts et il est placé de préférence à une distance comprise entre 0,5 micromètres et 1 millimètre du support en silicium. La couche du photo-résiste se carbonise par pyrolyse laser en exposant la couche à ce dernier. Ce qui implique la conversion des fonctions C-H-O en carbone. De préférence, l'exposition est réalisée pendant une durée comprise entre 1 seconde et une minute. Préférentiellement, le support en silicium est constitué par un monocristal de silicium et il a une épaisseur comprise entre 100 microns et 3 millimètres.

**Un sixième objet** de la présente invention est constitué par les électrodes obtenues par mise en oeuvre d'un des procédés définis dans le quatrième objet de l'invention.

**Un septième objet** de la présente invention est constitué par les systèmes électrochimiques comportant au moins une anode selon le cinquième objet de l'invention.

### Description de modes préférentiels de l'invention

La présente invention concerne l'utilisation d'un matériau poreux dans une micro batterie. Plus particulièrement, l'invention se rapporte à un générateur électrochimique incluant une électrode négative comprenant un métal poreux hôte, notamment le silicium. Le feuillard de métal hôte étant destiné à constituer ultérieurement une électrode négative et possédant la propriété d'absorber l'expansion latérale et de prévenir substantiellement le changement dans le plan du métal poreux lors de la formation d'alliage entre le métal hôte et le métal alcalin.

Notamment, après formation de l'alliage lithium matériau hôte, l'alliage se fissure lors de l'activité électrochimique. La possibilité d'avoir une expansion volumique joue un rôle prépondérant pour l'intégrité de l'électrode.

Le silicium poreux est ainsi avantageusement utilisé dans cette technologie comme matériau actif constitutif de l'anode pour la batterie li-ion. La capacité théorique du silicium poreux est de 1970 mAh/grammes et de 2280 mAh/l.

L'extension volumique associée à l'alliage de silicium et de lithium est de préférence comprise entre 30 et 40 %. Ainsi les cavités formées dans le silicium poreux servent à compenser l'expansion volumique de l'alliage à base de Li et de Si.

Le mécanisme de l'insertion de lithium chimique ou électrochimique dans le silicium poreux, selon un mode de réalisation de l'invention, est illustré dans la Figure 1-4.

L'espace vide généré par la porosité du silicium est occupé par l'extension volumique de l'alliage SiₓLi_{y}, avec x variant de 1 à 5 et y variant de 4 à 21. De préférence, l'alliage est de formule Li₂₁Si₅.

### Préparation du silicium poreux

Dans le cadre des procédés de préparation de silicium poreux, un mélange de NH4F est avantageusement utilisé pour dissoudre Si et SiO₂ présents comme impuretés.

Le silicium poreux est obtenu électrochimiquement dans un électrolyte à base de NH₄F (50%) + H₂O + Méthanol dans un ratio de (2:2:1), l'ajout du méthanol permet d'éviter la formation de l'hydrogène sur la surface. Le taux de porosité est calculé selon le taux d'intercalation du lithium qui est proportionnel à l'extension volumique de l'alliage SiₓLi_{y}. La porosité est mesurée par la méthode de mercure décrite dans la référence : The Powder Porosity Characterisation La bat NYS College of Ceramics at Alfred University, 18 juin 2002, http://nyscc.alfred.edu/external/ppc/ppc.html.

Cette technique est décrite plus en détail dans le domaine des semi-conducteurs http://etd.caltech.edu/etd/available/etd-08062002-192958/unrestricted/Chapter3.pdf, dans le chapitre 3 de la thèse de Ph.D intitulée Effects OF SURFACE MODIFICATION ON CHARGECARRIER DYNAMICS AT SEMICONDUCTEUR INTERFACES par Agnes Juang, 2003, California Institute of Technologie Pasadena, California.

Il a été trouvé de façon surprenante que des micro batteries, selon l'invention, utilisant des microélectrodes contenant du carbone et à base de silicium poreux sont fabriquées par différentes techniques originales ci-après expliquées de façon détaillée.

Il s'agit de la pyrolyse, thermique ou par laser des hétéroatomes de type H ou O présents à la surface de la silice qui ont été déposés comme couches minces sur l'isolant aussi appelé "l'insulator".

Les deux techniques impliquent la conversion des fonctions C-H-O en carbone, mais elles diffèrent dans la procédure par la formation de microstructures qui forment les microélectrodes dans la micro batterie. Dans les deux techniques, on part préférentiellement d'une qualité commerciale de silicium appelé silicium dense disponible sous forme de gaufres.

Selon une approche avantageuse, les techniques de préparation de semi-conducteurs impliquent le "patterning" du carbone par les méthodes de photolithographie impliquant un masque photo qui est employé pour "modeler" les structures d'électrodes qui peuvent être des surfaces interdigitalisées des électrodes.

### Première technique de préparation d'une électrode à base de silicium poreux

Un silicium conventionnel de transfert "gaufre" avec une couche d'isolation sert comme substrat pour les microélectrodes. Selon cette approche innovatrice, des électrodes de carbone sont formées à partir de photo-résistances régulières par traitement thermique (habituellement à températures de 600 à 1.100° Celsius dans une atmosphère inerte pendant une heure) qui les carbonise et qui rend la photo-résistance électriquement conductrice.

Les matériaux d'électrodes électrochimiquement actives peuvent être déposés de façon sélective sur les carbones par des méthodes électrochimiques, et pour certaines applications, le carbone lui-même peut servir comme électrode.

Le procédé qui est utilisé pour fabriquer les structures des microélectrodes met en oeuvre une succession d'étapes. Dans la première étape, une fine couche de Si₃N₄ (environ 100 nm) est déposée par déposition de vapeur chimique (CVD), qui sert d'isolateur pour séparer le silicium conducteur "wafer" de la structure carbonée. Des étapes subséquentes impliquant le couchage spin, le "patterning" et la pyrolyse de photo-résistance sont utilisés pour former la structure finale carbonée. À la fois la photo-résistance négative et celle positive sont utilisables pour former les micro-électrodes conductrices carbonées.

Ces techniques sont décrites dans les références : Abs 253, IMLB 12 Meeting, 2004 The Electrochemical Society, Journal of Power Sources, Volume: 89, Issue: 1, July, 2000 et Applied Physics Letters Vol 84(18) pp. 3456-3458. May 3, 2004.

### Deuxième technique de préparation d'une électrode à base de silicium poreux

La seconde approche n'implique pas l'utilisation d'un masque photo. En effet, on utilise seulement un étroit faisceau laser avec "path", contrôlé pour se déplacer selon une trajectoire spécifique "path". Le contrôle du déplacement du faisceau laser sur la surface de la photo-résistance par contrôle informatique autorise la préparation d'une large variété de dispositifs de microélectrodes comportant des canaux. L'intensité de la puissance de la vapeur laser est contrôlée afin d'éviter la vaporisation de la photo-résistance, au lieu de sa conversion en carbone, et ceci minimise aussi la perte de carbone par ablation au laser. Dans une étape subséquente, les photo-résistances n'ayant pas réagi dans certains secteurs qui ne sont pas exposés à la vapeur laser sont dissoutes pour laisser seulement les microélectrodes carbonées sur la gaufre de silicium. La radiation du faisceau laser est capable de convertir le polymère photo-résistant en carbone. De même, des résultats comparables à ceux obtenus par la pyrolyse thermique, sont obtenus par mise en oeuvre d'un spectre Raman.

Le document How Semiconductors are made E. Reichmanis and O. Nalamasu, Bell Labs, Lucent Technologies, Intersil, 20,06,2003, Intersil Corporation Headquarters and Elantec Product Group, 675 Trade Zone Blvd, Milpitas, CA 95035 décrit des gaufres de silicium (et leur mode de préparation) utilisables dans le cadre de la présente invention.

Le document de Martin Key, intitulé SU-8 Photosensitive Epoxy, CNM, Campus UAB, Bellaterra 08193, Barcelona, Spai (http://www.cnm.es/projects/microdets/index.html) illustre des méthodes permettant de déposer un polymère carboné sur des gaufres de silicium.

Le document Direct Measurement of the Reaction Front in Chemically Amplified Photoresists, E. Reichmanis and O. Nalamasu, Bell Labs, Lucent Technologies, Sciences, 297, 349 (2002) décrit des méthodes couramment utilisées pour attaquer des zones sélectionnées des photo-résitances.

### Exemples : microstructures carbone formées par pyrolyse au laser de photorésistance sont décrits ci-après.

Une photorésistance (Oir 897-101, Olin Corp., Norwalk, CT) a été utilisée pour produire un film mince d'un précurseur organique sur un substrat Si. Un microscope Raman intégré système Labram fabriqué par le groupe ISA Horiba a été utilisé pour la pyrolyse au laser de la photorésistance, et aussi pour analyser la structure du produit carboné.

La longueur d'onde d'excitation était soit fourme par HeNe (632 nm) interne, un laser 20 mW ou par un Ar-ion externe (514nm), 2 W Laser. La puissance du faisceau laser a été ajustée aux niveaux souhaités avec des filtres neutres de diverses densité optique variable.

La taille du faisceau laser à la surface de l'échantillon peut être modulée de 1,6 jusqu'à quelques centaines de microns; et il est contrôlé par les caractéristiques des microscopes optiques et la distance entre l'échantillon et les lentilles objectives. Le diamètre du faisceau laser appliqué dans nos expériences était de 5 microns. Pour contrôler la position de l'échantillon par rapport au faisceau laser, un microscope XY à balayage motorisé, de 0,1 micron de résolution a été utilisé. Le temps d'exposition de la photorésistance au faisceau laser a été contrôlé soit par la vitesse de balayage XY, soit par un faisceau laser shutter digital (modèle 845 HP par Newport Corp.), qui a été utilisé dans les expériences statiques.

Le control du déplacement de l'échantillon de la photo résistance - Si par le programme informatique permet de concevoir une large variété de microélectrodes sous forme de rangées.

La densité de puissance du faisceau laser doit être contrôlée afin d'éviter la vaporisation de la photorésistance sans la convertir en carbone ou de minimiser la perte de carbone par ablation laser.

Quatre couches d'une photo résistance positive on été enduites sur une gaufre de Si et ensuite cuites à 150 degrés Celsius. Une image optique qui illustre le résultat obtenu par la pyrolyse laser pour la production de structure carbone à partir d'une photorésistance positive est montrée dans la Figure attachée 4-4. Un laser opérant à 632 nm, et avec une taille de faisceau de 5 micromètres et d'une puissance de 8 mW, a été utilisé pour produire les carbones modelés. Un programme informatique a été utilisé pour contrôler le mouvement de l'échantillon pour former les configurations carbone. La vitesse du mouvement de l'échantillon XY motorisé était de 8 mm par seconde. La largeur de l'empreinte dans la structure interdigitalisée est d'environ 20 micromètres. Il est légèrement plus large que le lien du carbone qui les connecte parce que chaque doigt a été exposé deux fois au faisceau laser. Le spectre Raman du carbone positionné sur un des doigts est montré sur la même Figure 4-4. Il est remarquablement similaire à celui obtenu par pyrolyse thermique standard de la même photorésistante à 1.000 Celsius. Ces résultats préliminaires démontrent que l'ont obtient facilement des micro électrodes de carbone présentant un spectre Raman comparable à ceux obtenus par traitement thermique.

Une nouvelle technologie hautement performante et basée sur l'utilisation du laser est ainsi proposée pour la préparation de capacités d'une taille adaptée pour des dispositifs électroniques de petite taille.

Cette nouvelle méthode de l'invention appelée - lithographie laser directe (DDL) - permet de produire des micro électrodes à partir de précurseurs organiques et inorganiques, adaptés pour les batteries Li-ion et la création, à partir d'un type quelconque de substrat, de micro batteries fonctionnelles complètement rechargeables.

La versatilité de la technologie DLL permet la production sur mesure de sources de micro-puissance et qui peuvent être distribuées et intégrées directement aux composants électroniques.

De plus la technologie DLL ne nécessite pas de photo masque pour réaliser la configuration souhaitée pour les microélectrodes.

En conséquence, DDL peut produire un design de micro batterie plus rapidement que la photolithographie conventionnelle. Les micro batteries obtenues offrent une énergie spécifique et une puissance améliorées en raison de leur poids et de leurs volume réduits, lorsque le substrat électronique devient partie de des éléments de la batterie.

La cathode peut être préparée à partir d'une cible de matériau de cathode choisie de préférence dans le groupe constitué par LiCoO2, LiMn₂O₄, LiMn_{1/3}Ni_{1/3}Co_{1/3}O₂, LiMn_{1/2}Ni_{1/2}O₂, LiMPO₄ (M=Fe, Co, Ni, Mn) et les mélanges d'au moins deux de ces derniers, de préférence la cible de matériau est pressée, le laser est appliqué sur la cible à des puissances pouvant varier de 20mW à 2W pour créer le matériau poreux constitutif de la cathode qui est ensuite décapé de la cible par laser et déposé sur la demi-pile Si poreux/carbone/électrolyte.

Une seconde technique de préparation de la cathode par laser, se réalise à partir d'un composé sous forme pâteuse formée d'un mélange d'une poudre de cathode et d'une solution porteuse qui est de préférence du toluène, de l'heptane ou un mélange de ces derniers. La solution pâteuse est enduite sur une plaque support qui est de préférence en verre et placée à 100µm du substrat (silicium ou autre). Le faisceau laser de rayonnement UV est appliqué à travers la plaque support et la cathode est projetée sur le substrat par pyrolyse.

Bien que la présente invention ait été décrite à l'aide de mises en oeuvre spécifiques, il est entendu que plusieurs variations et modifications peuvent se greffer auxdites mises en oeuvre, et la présente invention vise à couvrir de telles modifications, usages ou adaptations de la présente invention suivant, en général, les principes de l'invention et incluant toute variation de la présente description qui deviendra connue ou conventionnelle dans le champ d'activité dans lequel se retrouve la présente invention, et qui peut s'appliquer aux éléments essentiels mentionnés ci-haut, en accord avec la portée des revendications suivantes.

## Revendications

1. Procédé de préparation d'une anode pour système électrochimique à partir d'un matériau poreux, ladite anode étant à base de silicium poreux et recouverte au moins partiellement de carbone, **caractérisé en ce qu'**il comprend une étape de pyrolyse d'une couche de polymère déposée en couche mince sur un support isolant en silicium poreux Si₃N₄, et **en ce que** ledit matériau poreux est susceptible de former un alliage avec un métal alcalin et est obtenu à partir d'une source de silicium choisi dans le groupe constitué par: les gaufres de silicium, les pastilles de silicium, les films de silicium et les mélanges d'au moins 2 de ces derniers.

2. Procédé selon la revendication 1, **caractérisé en ce que** la pyrolyse du polymère est effectuée par voie thermique.

3. Procédé selon la revendication 2, **caractérisé en ce que** la pyrolyse est effectuée à une température comprise entre 600 et 1 100°C, pendant une durée comprise entre 30 minutes et 3 heures.

4. Procédé selon la revendication 1, **caractérisé en ce que** la pyrolyse du polymère est effectuée à l'aide d'un laser.

5. Procédé selon la revendication 4, **caractérisé en ce que** le faisceau laser a une intensité comprise entre 10 et 100 milliwatts et il est placé à une distance comprise 0.5 µm et 1 mm du support en en silicium, pendant une durée comprise entre 1 seconde et une minute.

6. Procédé selon l'une des revendications 1 à 5, **caractérisé en ce que** la porosité dudit matériau varie de 20 à 80 %, bornes comprises.

7. Procédé de préparation d'une anode selon l'une quelconque des revendications 1 à 6, dans lequel la taille moyenne des pores dans ledit matériau poreux varie de 1 nm à 1 µm, bornes comprises.

8. Procédé de préparation d'une anode selon l'une des revendications 1 à 7, dans lequel l'anode est à base d'un silicium poreux dont la porosité, mesurée selon la méthode du porosimètre à mercure, varie de 5 à 95 % en volume, bornes comprises.

9. Procédé selon l'une des revendications 1 à 8, **caractérisé en ce que** le support en silicium poreux est constitué par un mono cristal de silicium et il a une épaisseur comprise entre 100 µm et 3 mm.

10. Procédé de préparation d'une anode selon l'une des revendications 1 à 71, dans lequel l'alliage à base de silicium poreux est sous la forme SiₓLi_{y}, x représentant un nombre compris entre 1 et 5, et y représentant un nombre compris entre 5 et 21.

11. Anode à base de silicium poreux et recouverte au moins partiellement de carbone, dans laquelle la taille moyenne des pores dans ledit silicium poreux varie de 1 nm à 1 µm, bornes comprises.

12. Anode selon la revendication 11, **caractérisée en ce qu'**elle contient au moins 60 % massique de silicium poreux.

13. Système électrochimique comportant au moins une anode telle que définie dans l'une quelconque des revendications 11 ou 12, au moins une cathode et au moins un électrolyte.

14. Batterie formée par un système électrochimique selon la revendication 13 dans lequel la matière active de la cathode est LiCoO₂, LiFePO₄, LiNiO₂, LiNi_{0.5}Mn_{0.5}O₂ ou LiNi_{0.33}Mn_{0.33}O₂, et la cathode est de type 1 à 5 Volts.

15. Batterie selon la revendication 14 de type rechargeable, de type lithium ion.

## Patentansprüche

1. Verfahren zur Herstellung einer Anode für ein elektrochemisches System aus einem porösen Material, wobei die Anode auf porösem Silicium basiert und mindestens teilweise mit Kohlenstoff bedeckt ist, **dadurch gekennzeichnet, dass** es einen Schritt der Pyrolyse eines Polymers umfasst, das in einer dünnen Schicht auf einem isolierenden Träger aus porösem Silicium Si₃N₄ abgelegt ist, und dadurch, dass das poröse Material eine Legierung mit einem Metall bilden kann und aus einer Siliciumquelle erhalten wird, ausgewählt aus der Gruppe, bestehend aus: Siliciumwaffeln, Siliciumpastillen, Siliciumfilmen und den Mischungen von mindestens 2 dieser Letzteren.

2. Verfahren nach Anspruch 1, **dadurch gekennzeichnet, dass** die Pyrolyse des Polymers auf thermischem Weg durchgeführt wird.

3. Verfahren nach Anspruch 2, **dadurch gekennzeichnet, dass** die Pyrolyse bei einer Temperatur, die im Bereich zwischen 600 ºC und 1100 ºC liegt, während einer Dauer im Bereich zwischen 30 Minuten und 3 Stunden durchgeführt wird.

4. Verfahren nach Anspruch 1, **dadurch gekennzeichnet, dass** die Pyrolyse des Polymers mit Hilfe eines Lasers durchgeführt wird.

5. Verfahren nach Anspruch 4, **dadurch gekennzeichnet, dass** der Laserstrahl ein Intensität aufweist, die im Bereich zwischen 10 und 100 Milliwatt liegt, und er in einem Abstand im Bereich zwischen 0,5 µm und 1 mm vom Siliciumträger während einer Dauer im Bereich zwischen 1 Sekunde und einer Minute angeordnet wird.

6. Verfahren nach einem der Ansprüche 1 bis 5, **dadurch gekennzeichnet, dass** die Porosität des Materials von 20 bis 80 % variiert, Grenzen eingeschlossen.

7. Verfahren zur Herstellung einer Anode nach einem beliebigen der Ansprüche 1 bis 6, wobei die mittlere Größe der Poren in dem porösen Material von 1 nm bis 1 µm variiert, Grenzen eingeschlossen.

8. Verfahren zur Herstellung einer Anode nach einem der Ansprüche 1 bis 7, wobei die Anode auf einem porösen Silicium basiert, dessen Porosität, gemessen gemäß dem Verfahren des Quecksilber-Porosimeters, von 5 bis 95 Vol.% variiert, Grenzen eingeschlossen.

9. Verfahren nach einem der Ansprüche 1 bis 8, **dadurch gekennzeichnet, dass** der poröse Siliciumträger aus einem Siliciummonokristall besteht und er eine Stärke im Bereich zwischen 100 µm und 3 mm aufweist.

10. Verfahren zur Herstellung einer Anode nach einem der Ansprüche 1 bis 7, wobei die Legierung basierend auf porösem Silicium die Form von SiₓLi_{y} aufweist, wobei x eine Zahl im Bereich zwischen 1 und 5 darstellt und y eine Zahl im Bereich zwischen 5 und 21 darstellt.

11. Anode, basierend auf porösem Silicium und mindestens teilweise mit Kohlenstoff bedeckt, wobei die mittlere Größe der Poren in dem porösen Silicium von 1 nm bis 1 µm variiert, Grenzen eingeschlossen.

12. Anode nach Anspruch 11, **dadurch gekennzeichnet, dass** sie mindestens 60 Massenprozent poröses Silicium enthält.

13. Elektrochemisches System, umfassend mindestens eine Anode, wie in einem beliebigen der Ansprüche 11 oder 12 definiert, mindestens eine Kathode und mindestens einen Elektrolyten.

14. Batterie, gebildet aus einem elektrochemischen System nach Anspruch 13, wobei der Wirkstoff der Kathode LiCoO₂, LiFePO₄, LiNiO₂, LiNi_{0,5}Mn_{0,5}O₂ oder LiNi_{0,33}Mn_{0,33}O₂ ist und die Kathode vom Typ 1 bis 5 Volt ist.

15. Batterie nach Anspruch 14 vom wiederaufladbaren Typ, vom Typ Lithium-ion.

## Claims

1. Method for preparing an anode for electrochemical system from a porous material, said anode being porous silicon-based and coated at least partly with carbon, **characterized in that** it comprises a step to pyrolyze a polymer layer deposited in a thin layer on an insulating substrate in porous silicon Si₃N₄, and **in that** said porous material is able to form an alloy with an alkali metal and is obtained from a silicon source selected from the group formed by silicon wafers, silicon pellets, silicon films and mixtures of at least two of the latter

2. The method according to claim 1, **characterized in that** pyrolysis of the polymer is performed via heat process.

3. The method according to claim 2, **characterized in that** pyrolysis is performed at a temperature of between 600 and 1100 °C for a time of between 30 minutes and 3 hours.

4. The method according to claim 1, **characterized in that** pyrolysis of the polymer is laser pyrolysis.

5. The method according to claim 4, **characterized in that** the laser beam has an intensity of between 10 and 100 milliwatts and it is positioned at a distance of between 0.5 µm and 1 mm from the silicon substrate for a time of between 1 second and one minute.

6. The method according to one of claims 1 to 5, **characterized in that** the porosity of said material varies from 20 to 80 %, limits included.

7. The method for preparing an anode according to any of claims 1 to 6, wherein the mean size of the pores in said porous material varies from 1 nm to 1 µm, limits included.

8. The method for preparing an anode according to one of claims 1 to 7 wherein the anode is porous silicon-based, the porosity of which measured using the mercury porosimetry method varies from 5 to 95 % by volume, limits included.

9. The method according to one of claims 1 to 8, **characterized in that** the substrate in porous silicon is formed of a silicon single crystal and has a thickness of between 100 µm and 3 mm.

10. The method for preparing an anode according to one of claims 1 to 7, wherein the porous silicon alloy is in SiₓLi_{y} form, x representing a number of between 1 and 5 and y representing a number of between 5 and 21.

11. Porous silicon-based anode coated at least partly with carbon, wherein the mean pore size in said porous silicon varies from 1 nm to 1 µm, limits included.

12. The anode according to claim 11, **characterized in that** it contains at least 60 weight % of porous silicon.

13. Electrochemical system comprising at least one anode such as defined in any of claims 11 or 12, at least one cathode and at least one electrolyte.

14. Battery formed of an electrochemical system according to claim 13, wherein the active material of the cathode is LiCoO₂, LiFePO₄, LiNiO₂, LiNi_{0.5}Mn_{0.5}O₂ or LiNi_{0.33}Mn_{0.33}O₂, and the cathode is of type 1 to 5 Volts.

15. The battery according to claim 14 of rechargeable type, of lithium-ion type.
